# EUROPEAN PATENT APPLICATION

(11) **EP 4 362 420 A1**
(43) Date of publication of application: **01.05.2024**
(21) Application number: 22906343.3
(22) Date of filing: 06.12.2022
(51) Int. Cl.: H04L 51/063

(54) **MULTIMEDIA MESSAGE TRANSMISSION METHOD AND APPARATUS**

(30) Priority: 16.12.2021 CN 202111546525
(71) Applicant: Huawei Technologies Co., Ltd., Shenzhen, Guangdong 518129 (CN)
(72) Inventor: LI, Zhonghua, Shenzhen, Guangdong 518129 (CN); WANG, Chunyong, Shenzhen, Guangdong 518129 (CN); GUO, Zhiyong, Shenzhen, Guangdong 518129 (CN)
(74) Representative: Isarpatent
(86) International application number: PCT/CN2022/136985
(87) International publication number: WO 2023/109593

(57) **Abstract**

Embodiments of this application provide a multimedia message transmission method and an apparatus, to meet requirements of different types of terminal devices. In this method, a network device may obtain at least two multimedia message bodies that are for same content. Sizes of the at least two multimedia message bodies are different. The network device may determine hardware information of a terminal device. The network device may send a multimedia message to the terminal device based on the hardware information. The network device may send, to the terminal device, a multimedia message that complies with a multimedia message capability corresponding to the hardware information. In comparison with a conventional technology of limiting a size of the multimedia message to 2M, in the method, the size of the multimedia message may be correspondingly increased based on the hardware information of the terminal device. In this way, performance such as definition and a pixel of the multimedia message can be improved, user experience can be improved, and requirements of a plurality of types of terminal devices can be met.

## Description

### CROSS-REFERENCE TO RELATED APPLICATION

This application claims priority to Chinese Patent Application No. 202111546525.1, filed with the China National Intellectual Property Administration on December 16, 2021 and entitled "MULTIMEDIA MESSAGE TRANSMISSION METHOD AND APPARATUS", which is incorporated herein by reference in its entirety.

### TECHNICAL FIELD

This application relates to the field of wireless communication technologies, and in particular, to a multimedia message transmission method and an apparatus.

### BACKGROUND

A fifth generation mobile communication technology (5th generation mobile technology, 5G) needs to be supported by a 5G terminal. However, currently, some terminals, such as a fourth generation mobile communication technology (4th generation mobile technology, 4G) terminal, cannot support the 5G communication technology.

Therefore, currently, when a terminal that supports the 5G communication technology sends a 5G message to a terminal that does not support the 5G communication technology, rich media content in the 5G message may be presented, in a form of a multimedia message, to the terminal that does not support the 5G communication technology.

However, due to different protocol stacks, multimedia messages of which receiving is supported by different types of terminals are of different sizes. Currently, a size of the multimedia message is limited to 2M. Consequently, the foregoing technology cannot meet a requirement of a terminal that supports receiving of a multimedia message whose size is greater than 2M.

### SUMMARY

Embodiments of this application provide a multimedia message transmission method and an apparatus, to meet requirements of different types of terminal devices for receiving multimedia messages.

According to a first aspect, a multimedia message transmission method is provided. The method may be performed by a network device or may be performed by a chip with a similar function of a network device. In this method, the network device may obtain at least two multimedia message bodies that are for same content. Sizes of the at least two multimedia message bodies are different. The network device may determine hardware information of a terminal device, where the terminal device is a terminal device that needs to obtain the foregoing content. The network device may send a multimedia message to the terminal device based on the hardware information. The sent multimedia message is generated based on one multimedia message body in the at least two multimedia message bodies, and a size of the multimedia message body complies with a multimedia message capability corresponding to the hardware information of the terminal device. The multimedia message capability herein may indicate an upper limit that is of a size of a multimedia message and that is supported by the terminal device.

Based on the foregoing solution, the network device may send the multimedia message that complies with the multimedia message capability of the terminal device to the terminal device. In comparison with a conventional technology of limiting a size of a multimedia message to 2M, in the method, the size of the multimedia message can be correspondingly increased based on the hardware information of the terminal device. In this way, an information amount of the multimedia message can be increased. For example, when the multimedia message is a picture or a video, performance such as definition and a pixel of the picture or the video can be improved. Therefore, user experience can be improved, and requirements of a plurality of types of terminal devices can be met.

In a possible implementation, the hardware information may include an operating system identifier of the terminal device. When the at least two multimedia message bodies include a first multimedia message body and a second multimedia message body, and a size of the first multimedia message body is less than a size of the second multimedia message body, the network device may determine, based on the operating system identifier, a multimedia message capability that is supported by an operating system indicated by the operating system identifier. When an upper limit that is of a size of a multimedia message, that is supported by the terminal device, and that is indicated by the multimedia message capability supported by the operating system indicated by the operating system identifier is greater than a preset threshold, the network device may send a multimedia message generated based on the second multimedia message body to the terminal device. When an upper limit of a size is less than or equal to a preset threshold, the network device may send a multimedia message generated based on the first multimedia message body to the terminal device.

Based on the foregoing solution, the network device may send, to the terminal device based on hardware information of an operating system type, a multimedia message that complies with a multimedia message capability corresponding to the operating system type. In this way, the size of the multimedia message can be correspondingly increased and user experience can be improved.

In a possible implementation, a manner in which the network device obtains the hardware information of the terminal device may be: receiving a multimedia message request from the terminal device, where the multimedia message request includes the hardware information.

Based on the foregoing solution, the network device may receive the multimedia message request from the terminal device when the terminal device intends to obtain the multimedia message, and the terminal device may carry the hardware information of the terminal device in the multimedia message request. Therefore, the hardware information that is of the terminal device and that is obtained by the network device is close to hardware information, of the terminal device, that exists when the terminal device obtains the multimedia message. Therefore, accuracy of the hardware information obtained by the network device is high, and obtaining efficiency is high.

In a possible implementation, the network device may further determine, based on registration information of the terminal device, that the terminal device is a non-5G-capability online terminal device. The network device may further send a notification message to the terminal device. The notification message is for notifying a case in which the network device has obtained the at least two multimedia message bodies that are for same content.

In a possible implementation, the network device may further store the at least two multimedia message bodies. The notification message includes a uniform resource locator (uniform resource locator, URL). The URL may indicate storage addresses of the at least two multimedia message bodies. The network device may store the multimedia message in the storage address indicated by the URL, and may notify the terminal device to download the multimedia message from the storage address indicated by the URL.

Based on the foregoing solution, the network device may store the at least two multimedia message bodies, and generate, based on the stored multimedia message bodies when the terminal device is to obtain the multimedia message, the multimedia message that complies with the multimedia message capability of the terminal device. Alternatively, the multimedia message generated based on the multimedia message body may be stored in the storage address indicated by the URL, and subsequently the terminal device is notified to download the corresponding multimedia message based on the storage address indicated by the URL. In this way, a more flexible implementation solution for transmission of the multimedia message is provided.

In a possible implementation, the network device may receive an application to person (application to person, A2P) message from an application server. The A2P message includes the content. The network device may generate the at least two multimedia message bodies based on the content.

According to a second aspect, a multimedia message transmission method is provided. The method may be performed by a terminal device or a chip with a similar function of a terminal device. In the method, the terminal device may send hardware information to a network device. The terminal device may receive a multimedia message from the network device. The multimedia message is generated by the network device based on a multimedia message body, and the multimedia message body is determined, based on the hardware information, by the network device in obtained at least two multimedia message bodies that are for same content. A size of the multimedia message body complies with a multimedia message capability corresponding to the hardware information. The multimedia message capability indicates an upper limit that is of a size of a multimedia message and that is supported by the terminal device, and the terminal device is a terminal device that needs to obtain the content.

In a possible implementation, the hardware information may include an operating system identifier of the terminal device, the at least two multimedia message bodies include a first multimedia message body and a second multimedia message body, and a size of the first multimedia message body is less than a size of the second multimedia message body. The terminal device may receive a first multimedia message from the network device when an upper limit that is of a size of a multimedia message and that is supported by an operating system indicated by the operating system identifier is less than a preset threshold. The first multimedia message is generated based on the first multimedia message body. The terminal device may receive a second multimedia message from the network device when an upper limit that is of a size of a multimedia message and that is supported by an operating system indicated by the operating system identifier is greater than a preset threshold. The second multimedia message is generated based on the second multimedia message body.

In a possible implementation, the terminal device may send a multimedia message request to the network device. The multimedia message request may include the hardware information, and the multimedia message request may request a multimedia message.

In a possible implementation, the terminal device may receive a notification message from the network device. The notification message is for notifying a case in which the network device has obtained the at least two multimedia message bodies that are for same content. The notification message may include a URL, where the URL indicates storage addresses of the multimedia message bodies. The terminal device may download the multimedia message from the storage address indicated by the URL, where the multimedia message is generated by the network device based on one multimedia message body and stored in the storage address indicated by the URL.

According to a third aspect, a communication apparatus is provided, and includes a transceiver unit and a processing unit.

The transceiver unit is configured to obtain at least two multimedia message bodies that are for same content. Sizes of the at least two multimedia message bodies are different. The processing unit is configured to: determine hardware information of a terminal device, where the terminal device is a terminal device that needs to obtain the content; and generate a multimedia message based on the hardware information. The multimedia message is generated based on one multimedia message body in the at least two multimedia message bodies, and a size of the multimedia message body complies with a multimedia message capability corresponding to the hardware information. The multimedia message capability indicates an upper limit that is of a size of a multimedia message and that is supported by the terminal device. The transceiver unit is further configured to send the multimedia message to the terminal device.

In a design, the hardware information includes an operating system identifier of the terminal device, and the at least two multimedia message bodies include a first multimedia message body and a second multimedia message body. A size of the first multimedia message body is less than a size of the second multimedia message body. The processing unit is specifically configured to: determine, based on the operating system identifier, a multimedia message capability that is supported by an operating system indicated by the operating system identifier; generate a multimedia message based on the second multimedia message body when an upper limit that is of a size of a multimedia message, that is supported by the terminal device, and that is indicated by the multimedia message capability supported by the operating system indicated by the operating system identifier is greater than a preset threshold; and generate a multimedia message based on the first multimedia message body when an upper limit of a size is less than or equal to a preset threshold.

In a design, the transceiver unit is further configured to receive a multimedia message request from the terminal device, where the multimedia message request includes the hardware information. When determining the hardware information of the terminal device, the processing unit is specifically configured to determine the hardware information of the terminal device based on the multimedia message request received by the transceiver unit.

In a design, the processing unit is further configured to: when determining, based on registration information of the terminal device, that the terminal device is a non-5G-capability online terminal device, send a notification message to the terminal device through the transceiver unit. The notification message is for notifying a case in which the network device has obtained the at least two multimedia message bodies that are for same content.

In a design, the processing unit is further configured to store the at least two multimedia message bodies. The notification message includes a uniform resource locator URL, where the URL indicates storage addresses of the at least two multimedia message bodies. The processing unit is further configured to store a generated multimedia message in the storage address indicated by the URL. The transceiver unit is further configured to notify the terminal device to download the multimedia message from the storage address indicated by the URL.

In a design, when obtaining the at least two multimedia messages that are for same content, the transceiver unit is specifically configured to receive an application-to-point interaction message A2P from an application server, where the A2P includes the content. The processing unit is further configured to generate the at least two multimedia message bodies based on the content.

According to a fourth aspect, a communication apparatus is provided, and includes a transceiver unit and a processing unit.

The processing unit is configured to generate hardware information. The transceiver unit is configured to: send the hardware information to a network device, and receive a multimedia message from the network device. The multimedia message is generated by the network device based on a multimedia message body, and the multimedia message body is determined, based on the hardware information, by the network device in obtained at least two multimedia message bodies that are for same content. A size of the multimedia message body complies with a multimedia message capability corresponding to the hardware information. The multimedia message capability indicates an upper limit that is of a size of a multimedia message and that is supported by the terminal device, and the terminal device is a terminal device that needs to obtain the content.

In a design, the hardware information may include an operating system identifier of the terminal device, the at least two multimedia message bodies include a first multimedia message body and a second multimedia message body, and a size of the first multimedia message body is less than a size of the second multimedia message body. The transceiver unit is specifically configured to: receive a first multimedia message from the network device when an upper limit that is of a size of a multimedia message and that is supported by an operating system indicated by the operating system identifier is less than a preset threshold, where the first multimedia message is generated based on the first multimedia message body; or receive a second multimedia message from the network device when an upper limit that is of a size of a multimedia message and that is supported by an operating system indicated by the operating system identifier is greater than a preset threshold. The second multimedia message is generated based on the second multimedia message body. The size of the first multimedia message body is less than the size of the second multimedia message body.

In a design, the transceiver unit is specifically configured to send a multimedia message request to the network device. The multimedia message request includes the hardware information, and the multimedia message request requests the multimedia message.

In a design, the transceiver unit is further configured to receive a notification message from the network device. The notification message is for notifying a case in which the network device has obtained the at least two multimedia message bodies that are for same content. The notification message includes a URL, where the URL indicates storage addresses of the multimedia message bodies. The transceiver unit is specifically configured to download the multimedia message from the storage address indicated by the URL, where the multimedia message is generated by the network device based on one multimedia message body and stored in the storage address.

According to a fifth aspect, this application provides a communication apparatus, including a processor. The processor is coupled to a memory, the memory stores a computer program or instructions, and the processor is configured to execute the computer program or the instructions, to perform the implementation methods in the first aspect or the second aspect. The memory may be located inside the apparatus, or may be located outside the apparatus. There are one or more processors.

According to a sixth aspect, this application provides a communication apparatus, including a processor and an interface circuit. The interface circuit is configured to communicate with another apparatus, and the processor is configured to implement the implementation methods in the first aspect or the second aspect based on the interface circuit.

According to a seventh aspect, a communication apparatus is provided. The apparatus includes a logic circuit and an input/output interface.

In a design, the logic circuit is configured to: obtain at least two multimedia message bodies that are for same content, where sizes of the at least two multimedia message bodies are different; and determine hardware information of a terminal device, and generate a multimedia message based on the hardware information. The multimedia message is generated based on one multimedia message body in the at least two multimedia message bodies, a size of the multimedia message body complies with a multimedia message capability corresponding to the hardware information, and the multimedia message capability indicates an upper limit that is of a size of a multimedia message and that is supported by the terminal device. The terminal device is a terminal device that needs to obtain the content. The input/output interface is configured to output the multimedia message to the terminal device.

In a design, the logic circuit is configured to generate hardware information. The input/output interface is configured to: output the hardware information to a network device, and input a multimedia message from the network device. The multimedia message is generated by the network device based on a multimedia message body, and the multimedia message body is determined, based on the hardware information, by the network device in obtained at least two multimedia message bodies that are for same content. A size of the multimedia message body complies with a multimedia message capability corresponding to the hardware information. The multimedia message capability indicates an upper limit that is of a size of a multimedia message and that is supported by a terminal device, and the terminal device is a terminal device that needs to obtain the content.

According to an eighth aspect, this application provides a communication system, including a first communication apparatus and at least one another communication apparatus that are configured to perform the implementation methods in the first aspect.

According to a ninth aspect, this application provides a communication system, including a network device configured to perform the implementation methods in the first aspect and a terminal device configured to perform the implementation methods in the second aspect.

According to a tenth aspect, this application further provides a chip system, including: a processor, configured to perform the implementation methods in the first aspect or the second aspect.

According to an eleventh aspect, this application further provides a computing program product, including computer-executable instructions. When the computer-executable instructions are run on a computer, the implementation methods in the first aspect or the second aspect are performed.

According to a twelfth aspect, this application further provides a computer-readable storage medium. The computer-readable storage medium stores a computer program or instructions. When the computer program or the instructions are run on a computer, the implementation methods in the first aspect or the second aspect are implemented.

For technical effects that can be achieved by the technical solutions in the second aspect to the twelfth aspect, refer to technical effects that can be achieved by the technical solutions in the first aspect. Details are not described herein again.

### BRIEF DESCRIPTION OF DRAWINGS

FIG. 1A is one of schematic diagrams of a communication system according to an embodiment of this application;
FIG. 1B is one of schematic diagrams of a communication system according to an embodiment of this application;
FIG. 2 is a schematic transmission diagram of converting a 5G message into a multimedia messaging service according to an embodiment of this application;
FIG. 3 is one of example flowcharts of a multimedia message transmission method according to an embodiment of this application;
FIG. 4 is one of example flowcharts of a multimedia message transmission method according to an embodiment of this application;
FIG. 5 is one of example flowcharts of a multimedia message transmission method according to an embodiment of this application;
FIG. 6 is one of example flowcharts of a multimedia message transmission method according to an embodiment of this application;
FIG. 7 is one of schematic diagrams of a communication apparatus according to an embodiment of this application;
FIG. 8 is one of schematic diagrams of a communication apparatus according to an embodiment of this application;
FIG. 9 is one of schematic diagrams of a communication apparatus according to an embodiment of this application; and
FIG. 10 is one of schematic diagrams of a communication apparatus according to an embodiment of this application.

### DESCRIPTION OF EMBODIMENTS

For ease of understanding of the technical solutions provided in embodiments of this application, the following explains and describes technologies and terms used in embodiments of this application.
(1) A 5G message is an upgrade of a short message service. The 5G message provides enhanced messaging services for users and can provide, for the users, media content such as text, pictures, audio, videos, locations, and contacts.
(2) A multimedia message may also be referred to as a multimedia messaging service (multimedia messaging service, MMS), and may refer to a multimedia information service. The multimedia message may support a multimedia function and can transfer content and information with comprehensive functions. The information may include information in various multimedia formats such as text, images, sound, and data.
   It should be understood that the multimedia message may include a multimedia message header and a multimedia message body. The multimedia message body may include information to be transmitted, such as text, images, sound, and data. The multimedia message header may include additional information of the multimedia message, such as a format of the multimedia message.
(3) An application to person (application to person, A2P) message may also be referred to as an A2P short message or an application short message.

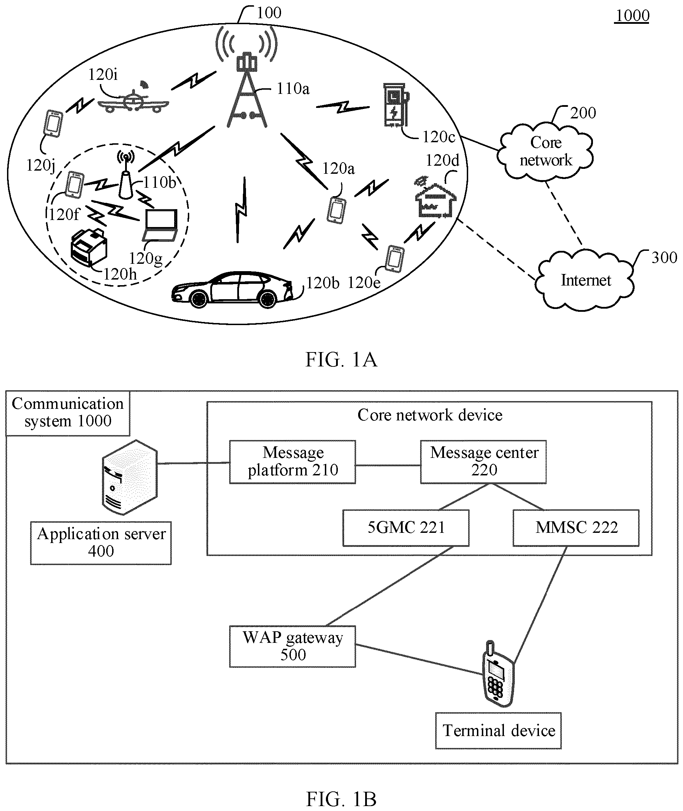

FIG. 1A is a schematic architectural diagram of a communication system 1000 to which an embodiment of this application is applied. As shown in FIG. 1A, the communication system includes a radio access network 100 and a core network 200. Optionally, the communication system 1000 may further include an internet 300. The radio access network 100 may include at least one network device (for example, 110a and 110b in FIG. 1A), and may further include at least one terminal device (for example, 120a to 120j in FIG. 1A). The terminal device is connected to the network device in a wireless manner, and the network device is connected to the core network in a wireless or wired manner. A core network device and the network device may be different physical devices independent of each other, functions of the core network device and logical functions of the network device may be integrated into a same physical device, or some functions of the core network device and some functions of the network device may be integrated into one physical device. The terminal device and the terminal device, and the network device and the network device may be connected to each other in a wired or wireless manner. FIG. 1A is merely a schematic diagram. The communication system may further include another network device, for example, may further include a wireless relay device and a wireless backhaul device, which are not shown in FIG. 1A.

The network device may also be referred to as a radio access network device, and may be a base station (base station), an evolved NodeB (evolved NodeB, eNodeB), a transmission reception point (transmission reception point, TRP), a next generation NodeB (next generation NodeB, gNB) in a fifth generation (5th generation, 5G) mobile communication system, a next generation NodeB in a sixth generation (6th generation, 6G) mobile communication system, a base station in a future mobile communication system, an access node in a Wi-Fi system, or the like; or may be a module or a unit that implements some functions of the base station, for example, may be a central unit (central unit, CU), or may be a distributed unit (distributed unit, DU). The CU completes functions of a radio resource control protocol and a packet data convergence protocol (packet data convergence protocol, PDCP) of the base station, and may further complete a function of a service data adaptation protocol (service data adaptation protocol, SDAP). The DU completes functions of a radio link control layer and a medium access control (medium access control, MAC) layer of the base station, and may further complete a function of some or all physical layers. For specific descriptions of the foregoing protocol layers, refer to related technical specifications of a 3rd generation partnership project (3rd generation partnership project, 3GPP). The network device may be a macro base station (for example, 110a in FIG. 1A), a micro base station or an indoor station (for example, 110b in FIG. 1A), or a relay node or a donor node. A specific technology and a specific device form that are used by the network device are not limited in embodiments of this application.

The terminal device may also be referred to as user equipment (user equipment, UE), a mobile station, a mobile terminal, or the like. The terminal apparatus may be widely used in various scenarios such as device-to-device (device-to-device, D2D) communication, vehicle to everything (vehicle to everything, V2X) communication, machine-type communication (machine-type communication, MTC), an internet of things (internet of things, IOT), a virtual reality, an augmented reality, industrial control, self-driving, telemedicine, a smart grid, smart furniture, a smart office, smart wearables, smart transportation, and a smart city. The terminal apparatus may be a mobile phone, a tablet computer, a computer having a wireless transceiver function, a wearable device, a vehicle, an uncrewed aerial vehicle, a helicopter, an airplane, a ship, a robot, a robot arm, a smart home device, or the like. A specific technology and a specific apparatus form that are used by the terminal apparatus are not limited in embodiments of this application.

The network device and the terminal device may be located at a fixed location, or may be mobile. The network device and the terminal device may be deployed on land, including an indoor device, an outdoor device, a handheld device, or a vehicle-mounted device; may be deployed on a water surface; or may be deployed on a plane, a balloon, and a satellite in the air. An application scenario of the network device and the terminal device is not limited in embodiments of this application.

Refer to FIG. 1B. The communication system 1000 in this embodiment of this application may further include an application server 400 and a wireless application protocol (wireless application protocol, WAP) gateway 500. The core network device may include a message platform 210 and a message center 220. It should be understood that the message platform 210 may be integrated into one or more network elements in the core network device, for example, integrated into a user plane network element (user plane function, UPF). Similarly, the message center 220 may also be integrated into one or more network elements in the core network device, for example, integrated into an access and mobility management function (access and mobility management function, AMF) network element.

The message platform 210 may be a message as a platform (message as a platform, MAAP), and is a system architecture of a message between an implementation point of a 5G message system and an application. An implementation form of the application in an MAAP architecture is a chatbot (chatbot) merchant. The chatbot merchant is a form of providing a service for an individual user through session interaction. The message platform 210 may provide access and control of the chatbot merchant and interconnection to the 5G message system, and mainly provides functions such as access management, message review, message control, capability discovery, content storage, spam message complaint, and spam message shielding of the chatbot merchant.

The message center 220 may include a 5G message center (message center, MC) 221 and a multimedia message center (multi-mission surface combatant, MMSC) 222. The 5GMC 220 may provide a secure and reliable multimedia service and a short message service for the user. A business service of the chatbot merchant is implemented through interconnection to the MAAP. The 5GMC 220 may send a multimedia message to a terminal device (for example, 120a to 120j in FIG. 1A). After downloading and displaying the multimedia message, the terminal device sends a status receipt to the MMSC 222, and the MMSC 222 may send the status receipt to the 5GMC 221.

The application server 400 may also be referred to as a merchant server, and may include a server of the chatbot merchant. The application server 400 may be a customer that provides the service for the individual user in a form of the chatbot merchant.

The WAP gateway 500 is configured to connect a wireless network and an internet, and can implement functions such as WAP stack conversion and content format conversion. A data access channel between a Microsoft media server protocol (Microsoft media server protocol, MMS) user agent and an MMS relay server is established through the WAP gateway, to support operations such as sending, receiving, and notifying multimedia information.

Currently, receiving and sending of a 5G message require a terminal device to support a 5G communication technology. However, currently, most terminal devices cannot support the 5G communication technology, in other words, cannot receive and send the 5G message. To enable rich media content in the 5G message to be presented to the terminal device, when a terminal device that receives the 5G message cannot support the 5G communication technology, the 5G message may be sent to the terminal device through a multimedia message. A WAP defines a standard for implementing the multimedia message. Currently, each multimedia message has an existing delivery channel, and each terminal device has a capability of parsing the multimedia message.

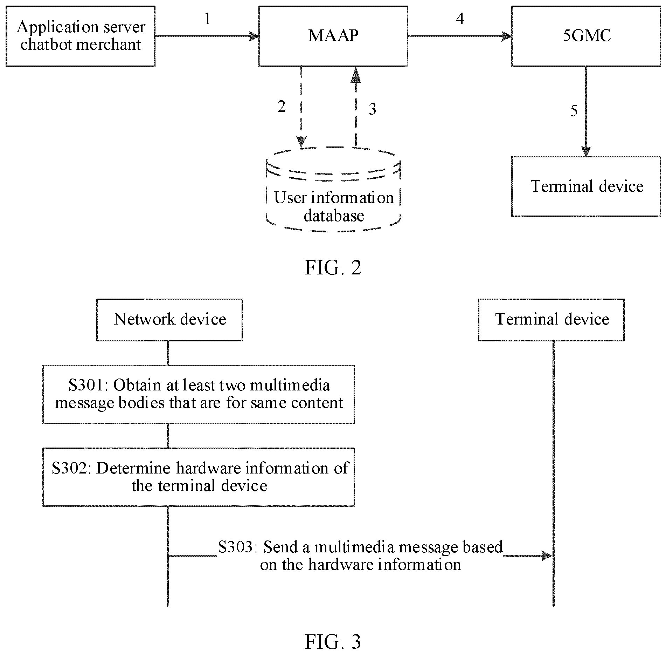

With reference to FIG. 2, the following describes a current transmission method in which a 5G message falls back to a multimedia messaging service. Currently, for the multimedia messaging service, a size of the multimedia messaging service is limited to 2M. Refer to FIG. 2. The current method in which a 5G message falls back to the multimedia messaging service includes the following operations.
1: A chatbot merchant may send, to an MAAP, content that needs to be sent. The MAAP prepares content information required by the multimedia messaging service. For example, the MAAP may generate a multimedia messaging service body.
2: The MAPP queries information about a terminal device in a user information database.
3: The MAAP determines, based on the queried information about the terminal device, whether the 5G message needs to be converted into the multimedia messaging service for transmission.
   For example, the MAAP may determine, based on the information about the terminal device, whether the terminal device supports a 5G communication technology. If the terminal device supports the 5G communication technology, the 5G message does not need to fall back to the multimedia messaging service for transmission. If the terminal device does not support the 5G communication technology, the 5G message needs to be converted into the multimedia messaging service for transmission to the terminal device.
4: If the MAAP determines that the 5G message needs to be converted into the multimedia messaging service for transmission, the MAAP may send service information (a WAP PUSH SMS) to the terminal device.
5: The terminal device receives the service information and sends a request to a 5GMC to download the multimedia messaging service. The MAAP may send the content information required by the multimedia messaging service to the 5GMC, and the 5GMC generates the multimedia messaging service. In this way, the terminal device can download the multimedia messaging service generated by the 5GMC.

If the terminal device is a non-5G message terminal device, an application server may enable the 5G message to fall back to the multimedia messaging service and deliver the multimedia messaging service to the terminal device. The application server may send, to a message platform, multimedia messaging service content that needs to be sent, and the message platform may send a multimedia messaging service body to a message center to which the terminal device belongs. The 5GMC included in the message center may notify the terminal device to download the multimedia messaging service. The terminal device may request a multimedia messaging service from the 5GMC through the WAP gateway 1400, and download the multimedia messaging service. After downloading and displaying the multimedia messaging service, the terminal device may send a status receipt to an MMSC to indicate that the multimedia messaging service is successfully received, and the MMSC may send the status receipt to the 5GMC.

However, currently, there are many limitations on the size of the multimedia messaging service, and requirements of a plurality of types of terminal devices cannot be met. For example, currently, the size of the multimedia messaging service is limited to 2M, while a maximum multimedia messaging service capability that can be supported by terminal devices of some operating systems is 4M. Therefore, for these terminal devices, if a multimedia messaging service of only 2M is sent, transmission of information in the multimedia messaging service is affected, and user experience is affected. In addition, in the foregoing method, the MAAP may query the information about the terminal device from the user information database, so that the MAAP may determine whether the terminal device supports the 5G communication technology. However, implementing the foregoing steps 2 and 3, in other words, implementing the steps of querying the information about the terminal device by the MAAP, has high costs. In addition, because user information is reported by the terminal device before the terminal device downloads the multimedia messaging service, for example, reported when the terminal device accesses a network device, the user information does not represent information that exists at a moment at which the terminal device downloads the multimedia messaging service, and there is a high error rate.

On this basis, an embodiment of this application provides a multimedia message transmission method. In this method, a network device may generate a plurality of multimedia messages of different sizes, and may obtain hardware information of a terminal device to determine a maximum multimedia message capability of the terminal device. On this basis, a size of the multimedia message sent by the network device to the terminal device may comply with the foregoing maximum multimedia message capability. Based on the foregoing solution, the network device may send, to the terminal device based on the hardware information of the terminal device, a multimedia message that complies with the maximum multimedia message capability of the terminal device. In this way, a transmission success rate of multimedia information can be improved and user experience can be improved.

FIG. 3 is a schematic diagram of multimedia message transmission according to an embodiment of this application. The following operations may be included.

S301: A network device obtains at least two multimedia message bodies that are for same content.

The content in S301 may refer to information to be sent to a terminal device, for example, text, a picture, or a video. Sizes of the at least two multimedia message bodies are different. The at least two multimedia message bodies each may be for generating a multimedia message. Because the sizes of the multimedia message bodies are different, sizes of generated multimedia messages are also different. For example, if a size of a multimedia message body 1 is 2M, a multimedia message generated based on the multimedia message body 1 may be greater than or equal to 2M. For another example, if a size of a multimedia message body 2 is 4M, a multimedia message generated based on the multimedia message body 2 may be greater than or equal to 4M. In other words, because the size of the multimedia message body 2 is greater than that of the multimedia message body 1, the size of the multimedia message generated based on the multimedia message body 2 is greater than that of the multimedia message generated based on the multimedia message body 1. That is, a size of a multimedia message generated based on a multimedia message body with a larger capacity in the at least two multimedia message bodies is also larger.

For example, the network device may add a multimedia message header to the multimedia message body, for example, add information such as a format of the multimedia message, to generate the multimedia message. It should be understood that a manner in which the network device generates the multimedia message is not specifically limited in embodiments of this application, and the foregoing method is merely used as an example.

In a possible implementation, the network device may generate the at least two multimedia message bodies of different sizes based on content received from an application server. For example, the network device may receive a 5G message, for example, an A2P message, from the application server. The 5G message may include the content. In this way, the network device can generate the at least two multimedia message bodies of different sizes based on the content. For example, the network device may generate, by adjusting definition, a length, a format, a pixel, and the like of the content, the at least two multimedia message bodies based on the content. Specifically, it is assumed that the content is a picture, the network device may generate the at least two multimedia message bodies of different sizes by adjusting a pixel of the picture. Alternatively, it is assumed that the content is a video, the network device may generate the at least two multimedia message bodies of different sizes by adjusting a length of the video, for example, reducing the length of the video, or by adjusting definition of the video, for example, adjusting the definition of the video to standard definition or high definition.

It should be understood that a manner in which the network device generates the at least two multimedia message bodies based on the content is not specifically limited in embodiments of this application. A size of each of the at least two multimedia message bodies generated by the network device is different. In this way, the multimedia message bodies of different sizes can be sent to terminal devices with different capabilities, to meet message receiving capability requirements of various types of terminal devices and improve receiving performance of the multimedia message.

In a possible case, the network device may store the at least two multimedia message bodies in a media server. It may be understood that the network device may store the at least two multimedia message bodies in one media server, or may store the at least two multimedia message bodies in two or more media servers. This is not specifically limited in this application.

In this embodiment of this application, the network device may include the message center and the message platform shown in FIG. 1B. In an example, the message platform, such as the MAAP shown in FIG. 1B, may receive the content from the application server, and generate the at least two multimedia message bodies based on the content. The message platform may send the at least two multimedia message bodies to the message center, for example, the 5GMC shown in FIG. 1B. The message center may store the at least two multimedia message bodies in the media server.

S302: The network device determines hardware information of the terminal device.

For example, the network device may determine hardware information of a terminal device that needs to obtain the content that is in S301. Specifically, the message center may determine the hardware information of the terminal device that needs to obtain the content that is in S301.

In an example, the network device may obtain the hardware information of the terminal device from a database. For example, the network device may store hardware information of an accessed terminal device. The hardware information may include one or more of a model, an operating system identifier, a screen size, and a resolution of the terminal device. For example, when the terminal device accesses the network device, or after the terminal device accesses the network device, the terminal device may send the hardware information, such as a model, to the network device. The network device may store a correspondence between the hardware information of the terminal device and identification information of the terminal device. In this way, the network device can obtain the hardware information of the terminal device from the database.

It may be understood that the network device may obtain, from the application server, information about the terminal device that needs to obtain the content that is in S301, for example, identification information. For example, the application server sends information about a called user to the network device, and the information about the called user may be understood as the information about the terminal device that needs to obtain the content that is in S301. Specifically, the 5G message sent by the application server to the network device may include the information about the called user. Therefore, the network device may search, based on the information that is about the terminal device and that is obtained from the application server, the database for hardware information corresponding to the identification information.

In another example, the network device may receive the hardware information from the terminal device. For example, the terminal device may send a get (GET) request to the network device, and the get request requests the multimedia message. The get request may include the hardware information of the terminal device.

S303: The network device sends the multimedia message to the terminal device based on the hardware information.

Correspondingly, the terminal device receives the multimedia message from the network device. For example, the message center, such as the 5GMC, may send the multimedia message to the terminal device.

Optionally, before the network device sends the multimedia message to the terminal device, for example, before S303, the network device may determine whether the terminal device is a 5G-capability online terminal device. Specifically, the message center, such as the 5GMC, may determine whether the terminal device is the 5G-capability online terminal device. The network device needs to be notified of subscription of a service of the 5G message during service subscription. For example, the terminal device may send, to the network device, a request message used for service subscription, and the network device may store service subscription information of the terminal device, such as a terminal device identifier or a user identifier. Therefore, the network device may determine, based on the stored service subscription information of the terminal device, whether the terminal device is the 5G-capability online terminal device.

For example, if the network device finds the information about the called user in the service subscription information of the terminal device, the network device may consider that the terminal device is the 5G-capability online terminal device. If the network device does not find the information about the called user in the service subscription information of the terminal device, the network device may consider that the terminal device is a non-5G-capability online terminal device.

Optionally, the 5G-capability online terminal device needs to periodically register with the network device. For example, the terminal device sends a registration request to the network device at an interval of a specific periodicity. The network device may store registration information of the terminal device. Therefore, the network device may also determine, based on the registration information of the terminal device, whether the terminal device is the 5G-capability online terminal device. For example, if the network device finds the information about the called user in the registration information of the terminal device, the network device may consider that the terminal device is the 5G-capability online terminal device. If the network device does not find the information about the called user in the registration information of the terminal device, the network device may consider that the terminal device is the non-5G-capability online terminal device.

For the non-5G-capability online terminal device, the network device may send, to the terminal device through a multimedia message channel, for example, a multimedia messaging service channel, a 5G message that the application server intends to send to the terminal device. In other words, the 5G message may fall back to the multimedia message, for example, fall back to a multimedia messaging service, and the multimedia messaging service is sent to the terminal device.

It may be understood that the size of the multimedia message sent by the network device to the terminal device in S303 may comply with a multimedia message capability corresponding to the hardware information. Different hardware information may have different multimedia message capabilities. The multimedia message capability may indicate an upper limit that is of a size of a multimedia message and that is supported by the terminal device. It is assumed that the hardware information includes the model of the terminal device. In this case, it is assumed that a multimedia message capability of a first model indicates that the upper limit that is of the size of the multimedia message and that is supported by the terminal device is 2M, and a multimedia message capability of a second model indicates that the upper limit that is of the size of the multimedia message and that is supported by the terminal device is 4M. In other words, the upper limit of the size of the multimedia message that can be received by the terminal device supporting the multimedia message capability of the first model is 2M, and the upper limit of the size of the multimedia message that can be received by the terminal device supporting the multimedia message capability of the second model is 4M. Therefore, in S303, it is assumed that the hardware information of the terminal device includes the first model, the network device needs to send a multimedia message whose size is not greater than 2M to the terminal device.

However, in S303, if the hardware information of the terminal device includes the second model, the network device needs to send a multimedia message whose size is not greater than 4M to the terminal device. However, if the message center sends a multimedia message of 2M to the terminal device, performance such as definition of the multimedia message received by the terminal device is affected, and user experience is affected. Therefore, the network device may send a multimedia message that complies with the multimedia message capability to the terminal device. For example, the size of the multimedia message sent by the network device to the terminal device may be less than or equal to a size indicated by the multimedia message capability, and greater than or equal to a difference between the size indicated by the multimedia message capability and a specified threshold. The specified threshold herein may be flexibly set based on an empirical value. For example, the specified threshold may be 0.5M or 1M.

For another example, when the multimedia message capability of the terminal device is greater than a preset threshold, the network device may send a multimedia message whose size is greater than the preset threshold to the terminal device. With reference to the foregoing example, it is assumed that the hardware information of the terminal device includes the second model, in other words, the multimedia message capability of the terminal device indicates that the upper limit of the size of the supported multimedia message is 4M. When the preset threshold is 2M, the network device may consider that the multimedia message capability of the terminal device indicates that the upper limit of the size of the supported multimedia message is greater than the preset threshold. Therefore, the network device may send a multimedia message whose size is greater than 2M to the terminal device. Similarly, the preset threshold may be flexibly set based on the empirical value. For example, the preset threshold may be set to 2M, 3M, or 4M. This is not specifically limited in this application.

Based on the foregoing solution, the network device may send the multimedia message that complies with the multimedia message capability to the terminal device. In comparison with a conventional technology of limiting the size of the multimedia message to 2M, based on the method shown in FIG. 3, the size of the multimedia message can be correspondingly increased based on the hardware information of the terminal device. In this way, performance such as the definition and the pixel of the multimedia message can be improved, user experience can be improved, and requirements of a plurality of types of terminal devices can be met.

In an example, when the network device determines that the 5G message needs to be sent to the terminal device through the multimedia message channel, the network device may send a notification message to the terminal device, to notify that the network device has obtained the at least two multimedia message bodies that are for same content, or this may be understood as notifying the terminal device to receive the multimedia message. For example, the network device may send service information (WAP push) to the terminal device. The service information may carry a URL. The URL herein may indicate storage addresses of the at least two multimedia message bodies.

In a possible case, after receiving the notification message, the terminal device may receive the multimedia message based on the notification message. For example, the terminal device may parse the notification message. The terminal device may determine, based on the parsed URL, the storage address for storing the multimedia message body. When accessing the URL according to a hypertext transfer protocol (hypertext transfer protocol, HTTP), the terminal device sends the hardware information to the network device, and the network device may obtain the hardware information of the terminal device in S301. In this way, the network device can select, from the at least two multimedia message bodies based on the hardware information, one multimedia message body that complies with the multimedia message capability corresponding to the hardware information, generate a multimedia message based on the multimedia message body, and store the multimedia message in the storage address indicated by the URL. The terminal device may download the multimedia message from the storage address indicated by the URL.

In embodiments of this application, the hardware information may reflect information such as a resolution, a screen size, and an operating system identifier of the terminal device. Therefore, the network device may send, to the terminal device based on the resolution, the screen size, and the operating system identifier corresponding to the hardware information, a multimedia message that matches the resolution, the screen size, and the operating system identifier of the terminal device. In this way, the multimedia message sent by the network device to the terminal device can better comply with a specific condition of the terminal device, so that the multimedia message can provide more specific media content, to improve user experience.

The operating system identifier may indicate an operating system type of the terminal device, and is mainly for limiting the size of the multimedia message. For example, an upper limit of a size of a multimedia message that can be received by an Android system is 4M, and an upper limit of a size of a multimedia message that can be received by an iOS system is 2M. Therefore, the upper limit of the size of the multimedia message sent by the network device to the Android system may be 4M, and the upper limit of the size of the multimedia message sent by the network device to the iOS system may be 2M.

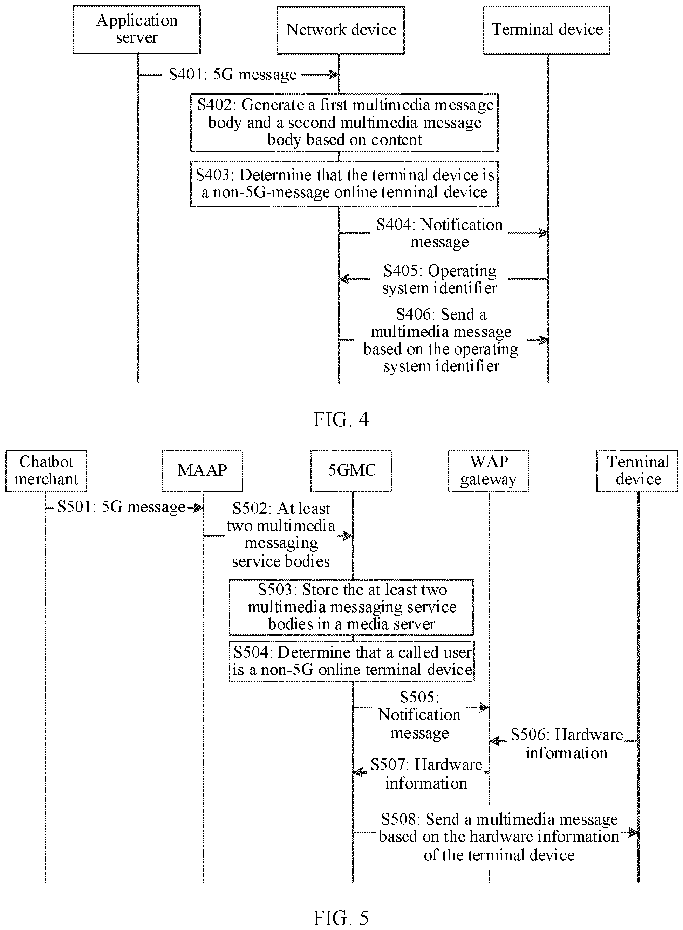

The following describes a multimedia message transmission method provided in an embodiment of this application with reference to FIG. 4. In the embodiment shown in FIG. 4, an example in which hardware information includes an operating system identifier is used for description. In addition, in the embodiment shown in FIG. 4, an example in which a network device may obtain two multimedia message bodies is used for description. For ease of description, the two multimedia message bodies are respectively referred to as a first multimedia message body and a second multimedia message body.

FIG. 4 is an example flowchart of the multimedia message transmission method according to an embodiment of this application. The method may include the following operations.

S401: An application server sends a 5G message to the network device.

Correspondingly, the network device receives the 5G message from the application server. The 5G message includes content. Optionally, the 5G message further includes information about a called user.

S402: The network device generates the first multimedia message body and the second multimedia message body based on multimedia message content.

S402 may be an implementation of S301. A size of the first multimedia message body may be less than a size of the second multimedia message body. For example, the size of the first multimedia message body may be 2M, and the size of the second multimedia message body may be 4M.

S403: The network device determines that a terminal device is a non-5G-capability online terminal device.

S403 may be implemented with reference to the related manner in the embodiment shown in FIG. 3. For example, the network device may determine, from registration information of the terminal device or service subscription information of the terminal device, that a terminal device corresponding to the information that is about the called user and that is in the 5G message in S401 is a non-5G-capability online terminal device.

S404: The network device sends a notification message to the terminal device.

Correspondingly, the terminal device receives the notification message from the network device. For example, the network device sends service information to the terminal device. The notification message in S404 may include a URL, and may be implemented with reference to the related manner in the embodiment shown in FIG. 3.

S405: The terminal device sends an operating system identifier to the network device.

Correspondingly, the network device receives the operating system identifier from the terminal device.

S405 may be an implementation of S302. For example, the terminal device may send a get request to the network device, and the get request may include the operating system identifier of the terminal device.

S406: The network device sends a multimedia message to the terminal device based on the operating system identifier.

Correspondingly, the terminal device receives the multimedia message from the network device.

S406 is an implementation of S302, and may be implemented with reference to S302. The network device may determine an operating system type of the terminal device based on the operating system identifier. In this way, the network device can determine a multimedia message capability of the terminal device. It is assumed that the operating system type of the terminal device is an Android system, in other words, the multimedia message capability of the terminal device indicates that an upper limit that is of a size of a multimedia message and that is supported by the terminal device is 4M. In this case, in S406, the network device may generate a multimedia message based on the second multimedia message body, and send the multimedia message whose size has an upper limit of 4M to the terminal device.

It should be understood that, if there are more operating system types, and multimedia message capabilities of different operating system types each are different, the network device may generate multimedia message bodies that comply with all operating system types. In other words, the network device may generate two or more multimedia message bodies based on the multimedia message capabilities corresponding to the operating system types, to meet requirements of terminal devices of different operation types.

For ease of understanding of the technical solutions provided in embodiments of this application, the following describes the technical solutions provided in embodiments of this application in detail with reference to FIG. 5. In the embodiment shown in FIG. 5, it is assumed that hardware information includes an operating system identifier, and a preset threshold is 2M. In the embodiment shown in FIG. 5, an application server may be a chatbot merchant, and a network device may include a message platform and a message center shown in FIG. 1B. Examples in which the message platform is an MAAP and the message center is a 5GMC are used for description. In addition, in the embodiment shown in FIG. 5, a multimedia messaging service is used as an example of a multimedia message for description.

S501: The chatbot merchant sends a 5G message to the MAAP.

Correspondingly, the MAAP receives the 5G message from the chatbot merchant.

For example, a chatbot merchant platform sends an A2P message to the MAAP. The A2P message may include multimedia message content. Optionally, the 5G message may include information about a called user.

For the 5G message in S501, refer to related descriptions in the embodiment shown in FIG. 3.

S502: The MAAP sends at least two multimedia messaging service bodies to the 5GMC.

Correspondingly, the 5GMC receives the at least two multimedia messaging service bodies from the MAAP.

For example, the MAAP may send a first multimedia messaging service body and a second multimedia messaging service body to the 5GMC. For example, the MAAP sends two fields to the 5GMC, where one field carries a multimedia messaging service body whose size does not exceed 2M, and the other field carries a multimedia messaging service body whose size exceeds 2M. The MAAP may generate the first multimedia messaging service body and the second multimedia messaging service body based on the content that is in S501.

Optionally, the MAAP may also send the information about the called user to the 5GMC.

S502 may be implemented with reference to S301.

S503: The 5GMC stores the at least two multimedia messaging service bodies in a media server.

For example, the 5GMC may store the first multimedia messaging service body in a first media server, and store the second multimedia messaging service body in a second media server. For another example, the 5GMC may store the first multimedia messaging service body and the second multimedia messaging service body in a same media server.

S503 may be implemented with reference to the related implementation in the embodiment shown in FIG. 3.

S504: The 5GMC determines that the called user is a non-5G online terminal device.

For example, the 5GMC may determine, based on the information that is about the called user and that is obtained from the MAAP and based on registration information and/or service subscription information, whether the called user is the non-5G online terminal device. If the 5GMC determines that the called user is the non-5G online terminal device, the 5GMC may enable the 5G message to fall back to the multimedia messaging service and send the multimedia messaging service to the terminal device. S504 may be implemented with reference to the related manner in the embodiment shown in FIG. 3.

S505: The 5GMC sends a notification message to the terminal device.

Correspondingly, the terminal device receives the notification message from the 5GMC.

For example, the 5GMC may send a WAP push to the terminal device. The WAP push may carry a URL that stores a multimedia messaging service body. S505 may be implemented with reference to the related manner in the embodiment shown in FIG. 3.

S506: The terminal device sends the hardware information to a WAP gateway.

Correspondingly, the WAP gateway receives the hardware information from the terminal device.

For example, the terminal device may send, to the WAP, a multimedia message request, such as a get request, carrying the hardware information such as the operating system identifier. S506 may be an implementation of S302, and may be implemented with reference to S302.

S507: The WAP gateway sends the hardware information to the 5GMC.

Correspondingly, the 5GMC receives the hardware information from the WAP gateway.

For example, the WAP gateway may send, to the 5GMC, the multimedia message request, for example, the get request, received from the terminal device. The 5GMC may receive the hardware information, for example, the operating system identifier, of the terminal device according to S506 and S507.

S506 and S507 are implementations of S302.

S508: The 5GMC sends the multimedia message to the terminal device based on the hardware information of the terminal device.

Correspondingly, the terminal device receives the multimedia message from the 5GMC.

S508 may be implemented with reference to S302. For example, the 5GMC may send the multimedia message to the terminal device based on the operating system identifier of the terminal device.

In a possible case, the 5GMC may obtain the hardware information of the terminal device by parsing header information of the multimedia message request, to determine a multimedia message capability or a multimedia messaging service capability of the terminal device.

It is assumed that the hardware information includes the operating system identifier. If the operating system identifier of the terminal device indicates that an operating system type of the terminal device is an Android system, the multimedia messaging service capability of the terminal device indicates that an upper limit that is of a size of a multimedia messaging service and that is supported by the terminal device is 4M. If the operating system identifier of the terminal device indicates that an operating system type of the terminal device is an iOS system, the multimedia messaging service capability of the terminal device indicates that an upper limit that is of a size of a multimedia messaging service and that is supported by the terminal device is 2M.

In the embodiment shown in FIG. 5, it is assumed that the operating system type of the terminal device is the Android system. The 5GMC may determine that the multimedia messaging service capability of the terminal device indicates that the upper limit that is of the size of the multimedia messaging service and that is supported by the terminal device is 4M, that is, is greater than a preset threshold (3M). In this case, the 5GMC may determine, from the at least two multimedia messaging service bodies, a multimedia messaging service body that complies with the upper limit of the size. For example, the second multimedia messaging service body is encapsulated into a multimedia messaging service and sent to the terminal device.

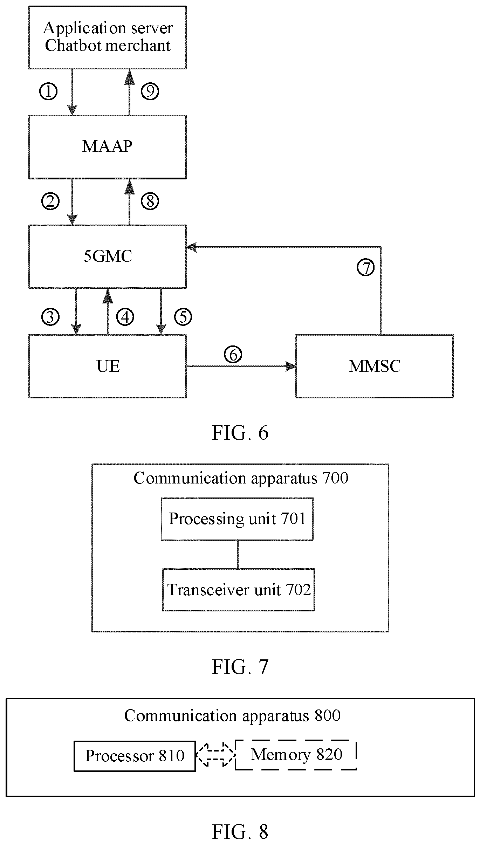

The following describes a multimedia message transmission method provided in an embodiment of this application with reference to FIG. 6. The method may include the following operations. In the embodiment shown in FIG. 6, an application server may be a chatbot merchant, a terminal device is referred to as UE for short, and a network device may include a message platform and a message center shown in FIG. 1B. Examples in which the message platform is an MAAP and the message center is a 5GMC are used for description.

Step 1: The chatbot merchant sends a 5G message to the MAAP.

In the foregoing step, the 5G message may include content. Optionally, the 5G message may further include information about a called user. The foregoing step may be implemented with reference to S401.

Step 2: The MAAP sends an A2P message to the 5GMC.

The A2P message may include at least two multimedia messaging service bodies, and sizes of the at least two multimedia messaging service bodies are different. The foregoing step may be implemented with reference to S502.

Step 3: The 5GMC sends service information to the UE.

If the 5GMC determines that the UE does not support a 5G communication technology, the 5GMC may convert the 5G message into a multimedia messaging service and send the multimedia messaging service to the UE. For a method in which the 5GMC determines whether the UE supports the 5G communication technology, refer to related descriptions in the method embodiment shown in FIG. 3. Details are not described herein again.

The foregoing step may be implemented with reference to S505. The service information may carry a URL that stores a multimedia messaging service body.

Step 4: The UE accesses the URL and sends a get request to the 5GMC.

The get request may include hardware information of the UE. The foregoing step may be implemented with reference to S506.

Step 5: The 5GMC selects, based on the hardware information, a multimedia messaging service body that complies with a multimedia message capability corresponding to the hardware information, to generate a multimedia messaging service, and sends the multimedia messaging service to the UE.

The foregoing step may be implemented with reference to S303. The 5GMC may send the generated multimedia messaging service to the UE, and the UE may download the multimedia messaging service sent by the 5GMC.

Step 6: The UE sends a status receipt to an MMSC.

For example, if the UE successfully downloads the multimedia messaging service, the UE may send, to the MMSC, an acknowledgement, for example, MM1_acknowledge, to notify a case in which the UE has successfully received the multimedia messaging service. If the UE fails to download the multimedia messaging service, the UE may send, to the MMSC, a negative acknowledgement, for example, MM1_notification, to notify a case in which the UE fails to receive the multimedia messaging service.

Step 7: The MMSC sends the status receipt to the 5GMC.

For example, if the MMSC in step 6 receives the acknowledgement, the MMSC in step 7 may send the acknowledgement to the 5GMC, to notify the case in which the UE has successfully received the multimedia messaging service. If the MMSC in step 6 receives the negative acknowledgement, the MMSC in step 7 may send the negative acknowledgement to the 5GMC, to notify the case in which the UE fails to receive the multimedia messaging service.

Step 8: The 5GMC sends the status receipt to the MAAP.

For example, if the 5GMC in step 7 receives the acknowledgement, the 5GMC in step 8 may send the acknowledgement to the MAAP, to notify the case in which the UE has successfully received the multimedia messaging service. If the 5GMC in step 7 receives the negative acknowledgement, the 5GMC in step 8 may send the negative acknowledgement to the MAAP, to notify the case in which the UE fails to receive the multimedia messaging service.

Step 9: The MAAP sends the status receipt to the chatbot merchant.

For example, if the MAAP in step 8 receives the acknowledgement, the MAAP in step 9 may send the acknowledgement to the chatbot merchant, to notify the case in which the UE has successfully received the multimedia messaging service. If the MAAP in step 8 receives the negative acknowledgement, the MAAP in step 9 may send the negative acknowledgement to the chatbot merchant, to notify the case in which the UE fails to receive the multimedia messaging service.

Based on a same concept, refer to FIG. 7. An embodiment of this application provides a communication apparatus 700. The apparatus 700 includes a processing unit 701 and a transceiver unit 702. The apparatus 700 may be a terminal device, or may be an apparatus that is used in a terminal device and that can support the terminal device in performing a communication method. Alternatively, the apparatus 700 may be a network device, or may be an apparatus that is used in a network device and that can support the network device in performing a method.

The transceiver unit may also be referred to as a transceiver module, a transceiver, a transceiver device, a transceiver apparatus, or the like. The processing unit may also be referred to as a processor, a processing board, a processing unit, a processing apparatus, or the like. Optionally, a component that is in the transceiver unit and that is configured to implement a receiving function is considered as a receiving unit. It should be understood that the transceiver unit is configured to perform a sending operation and a receiving operation on a terminal device side or a network device side in the foregoing method embodiments. A component that is in the transceiver unit and that is configured to implement a sending function is considered as a sending unit. That is, the transceiver unit includes the receiving unit and the sending unit. When the apparatus 700 is used in the network device, the receiving unit included in the transceiver unit 702 of the apparatus 700 is configured to perform the receiving operation on the network device side, for example, obtain at least two multimedia message bodies that are for same content; and the sending unit included in the transceiver unit 702 of the apparatus 700 is configured to perform the sending operation on the network device side, for example, send a multimedia message. When the apparatus 700 is used in the terminal device, the receiving unit included in the transceiver unit 702 of the apparatus 700 is configured to perform the receiving operation on the terminal device side, for example, receive a multimedia message, and specifically, may receive the multimedia message from the network device. The sending unit included in the transceiver unit 702 of the apparatus 700 is configured to perform the sending operation on the terminal device side, for example, send hardware information, and specifically, may send the hardware information to the network device.

In addition, it should be noted that, if the apparatus is implemented by using a chip/chip circuit, the transceiver unit may be an input/output circuit and/or a communication interface, and performs an input operation (which corresponds to the receiving operation) and an output operation (which corresponds to the sending operation). The processing unit is an integrated processor, a microprocessor, or an integrated circuit.

The following describes in detail an implementation in which the apparatus 700 is used in the network device or the terminal device.

For example, operations performed by units of the apparatus 700 used in the network device are described in detail.

The transceiver unit 702 is configured to obtain at least two multimedia message bodies that are for same content. Sizes of the at least two multimedia message bodies are different. The processing unit 701 is configured to: determine hardware information of the terminal device, where the terminal device is a terminal device that needs to obtain the content; and generate a multimedia message based on the hardware information. The multimedia message is generated based on one multimedia message body in the at least two multimedia message bodies, and a size of the multimedia message body complies with a multimedia message capability corresponding to the hardware information. The multimedia message capability indicates an upper limit that is of a size of a multimedia message and that is supported by the terminal device. The transceiver unit 702 is further configured to send the multimedia message to the terminal device.

For more detailed descriptions of the processing unit 701 and the transceiver unit 702, directly refer to related descriptions in the method embodiments shown in FIG. 3 to FIG. 6. Details are not described herein again.

For example, operations performed by units of the apparatus 700 used in the terminal device are described in detail.

The processing unit 701 is configured to generate hardware information. The transceiver unit 702 is configured to: send the hardware information to the network device, and receive a multimedia message from the network device. The multimedia message is generated based on a multimedia message body. The multimedia message body is determined based on the hardware information, and a size of the multimedia message body complies with a multimedia message capability corresponding to the hardware information. The multimedia message capability indicates an upper limit that is of a size of a multimedia message and that is supported by the terminal device.

For more detailed descriptions of the processing unit 701 and the transceiver unit 702, directly refer to related descriptions in the method embodiments shown in FIG. 3 to FIG. 6. Details are not described herein again.

Based on a same concept, as shown in FIG. 8, an embodiment of this application provides a communication apparatus 800. The communication apparatus 800 includes a processor 810. Optionally, the communication apparatus 800 may further include a memory 820, configured to: store instructions to be executed by the processor 810, store input data required for running the instructions by the processor 810, or store data generated after the processor 810 runs the instructions. The processor 810 may implement the method shown in the foregoing method embodiments based on the instructions stored in the memory 820.

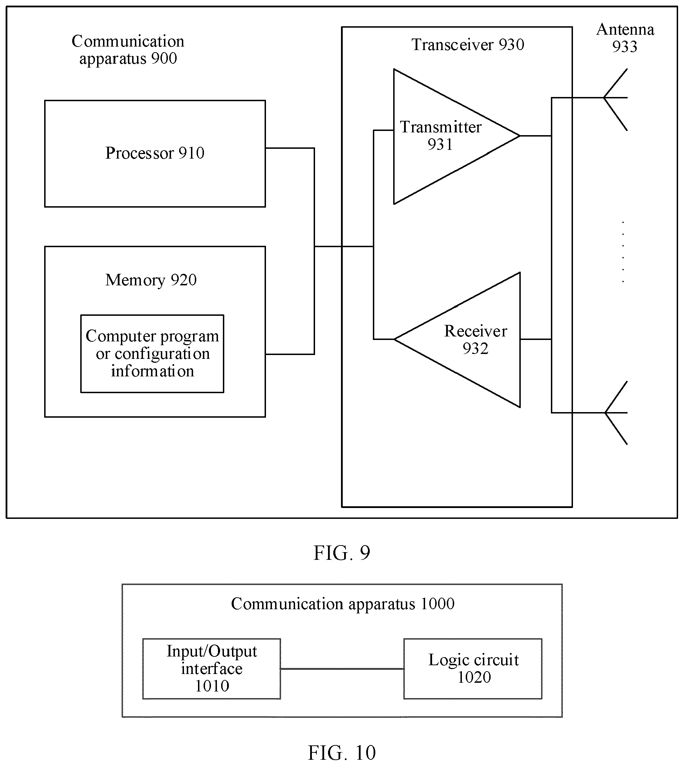

Based on a same concept, as shown in FIG. 9, an embodiment of this application provides a communication apparatus 900. The communication apparatus 900 may be a chip or a chip system. Optionally, in embodiments of this application, the chip system may include a chip, or may include a chip and another discrete device.

The communication apparatus 900 may include at least one processor 910. The processor 910 is coupled to a memory. Optionally, the memory may be located inside the apparatus, or may be located outside the apparatus. For example, the communication apparatus 900 may further include at least one memory 920. The memory 920 stores a computer program, configuration information, a computer program, or instructions and/or data necessary for implementing any one of the foregoing embodiments. The processor 910 may execute the computer program stored in the memory 920, to complete the method in any one of the foregoing embodiments.

The coupling in embodiments of this application may be an indirect coupling or a communication connection between apparatuses, units, or modules in an electrical form, a mechanical form, or another form, and is used for information exchange between the apparatuses, the units, or the modules. The processor 910 may cooperate with the memory 920. A specific connection medium between the transceiver 930, the processor 910, and the memory 920 is not limited in this embodiment of this application.

The communication apparatus 900 may further include the transceiver 930, and the communication apparatus 900 may exchange information with another device via the transceiver 930. The transceiver 930 may be a circuit, a bus, a transceiver, or any other apparatus that can be configured to exchange information, or may be referred to as a signal transceiver unit. As shown in FIG. 9, the transceiver 930 includes a transmitter 931, a receiver 932, and an antenna 933. In addition, when the communication apparatus 900 is a chip-type apparatus or circuit, the transceiver in the communication apparatus 900 may also be an input/output circuit and/or a communication interface, and may input data (or referred to as receive data) and output data (or referred to as send data). The processor is an integrated processor, a microprocessor, or an integrated circuit, and the processor may determine the output data based on the input data.

In a possible implementation, the communication apparatus 900 may be used in a network device. Specifically, the communication apparatus 900 may be the network device, or may be an apparatus that can support the network device and implement a function of the network device in any one of the foregoing embodiments. The memory 920 stores a computer program, or instructions and/or data necessary for implementing a function of the network device in any one of the foregoing embodiments. The processor 910 may execute the computer program stored in the memory 920, to complete the method performed by the network device in any one of the foregoing embodiments. The communication apparatus 900 is used in the network device, the transmitter 931 in the communication apparatus 900 may be configured to send a multimedia message to a terminal device through the antenna 933, and the receiver 932 may be configured to obtain hardware information through the antenna 933.

In another possible implementation, the communication apparatus 900 may be used in a terminal device. Specifically, the communication apparatus 900 may be the terminal device, or may be an apparatus that can support the terminal device and implement a function of the terminal device in any one of the foregoing embodiments. The memory 920 stores a computer program, a computer program, or instructions and/or data necessary for implementing a function of the terminal device in any one of the foregoing embodiments. The processor 910 may execute the computer program stored in the memory 920, to complete the method performed by the terminal device in any one of the foregoing embodiments. The communication apparatus 900 is used in the terminal device, the receiver 932 in the communication apparatus 900 may be configured to receive a multimedia message through the antenna 933, and the transmitter 931 may be configured to send hardware information to a network device through the antenna 933.

The communication apparatus 900 provided in this embodiment may be used in the network device to complete the method performed by the network device, or may be used in the terminal device to complete the method performed by the terminal device. Therefore, for the technical effects that can be obtained by the communication apparatus 900, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logical block diagrams disclosed in embodiments of this application. The general-purpose processor may be a microprocessor, any conventional processor, or the like. The steps of the methods disclosed with reference to embodiments of this application may be directly performed by a hardware processor, or may be performed by using a combination of hardware in the processor and a software module.

In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be configured to carry or store expected program code in a form of an instruction or a data structure and that can be accessed by a computer. This is not limited thereto. Alternatively, the memory in embodiments of this application may be a circuit or any other apparatus that can implement a storage function, and is configured to store a computer program, a computer program, or instructions and/or data.

Based on the foregoing embodiments, refer to FIG. 10. An embodiment of this application further provides another communication apparatus 1000, including an input/output interface 1010 and a logic circuit 1020. The input/output interface 1010 is configured to receive code instructions and transmit the code instructions to the logic circuit 1020. The logic circuit 1020 is configured to run the code instructions to perform the method performed by the network device or the terminal device in any one of the foregoing embodiments.

The following describes in detail an operation performed by the communication apparatus used in the network device or the terminal device.

In an optional implementation, the communication apparatus 1000 may be used in the network device, to perform the method performed by the network device, and specifically, for example, the method performed by the network device in embodiments shown in FIG. 3 to FIG. 6. Specifically, the logic circuit 1020 is configured to: obtain at least two multimedia message bodies that are for same content, where sizes of the at least two multimedia message bodies are different; and determine hardware information of a terminal device, and generate a multimedia message based on the hardware information. The multimedia message is generated based on one multimedia message body in the at least two multimedia message bodies, a size of the multimedia message body complies with a multimedia message capability corresponding to the hardware information, and the multimedia message capability indicates an upper limit that is of a size of a multimedia message and that is supported by the terminal device. The terminal device is a terminal device that needs to obtain the content. The input/output interface 1010 is configured to output the multimedia message to the terminal device.

In another optional implementation, the communication apparatus 1000 may be used in the terminal device, to perform the method performed by the terminal device, and specifically, for example, the method performed by the terminal device in the method embodiments shown in FIG. 3 to FIG. 6. Specifically, the logic circuit 1020 is configured to generate hardware information. The input/output interface 1010 is configured to: output the hardware information to a network device, and input a multimedia message from the network device. The multimedia message is generated based on a multimedia message body. The multimedia message body is determined based on the hardware information, and a size of the multimedia message body complies with a multimedia message capability corresponding to the hardware information. The multimedia message capability indicates an upper limit that is of a size of a multimedia message and that is supported by the terminal device.

The communication apparatus 1000 provided in this embodiment may be used in the network device to complete the method performed by the network device, or may be used in the terminal device to complete the method performed by the terminal device. Therefore, for the technical effects that can be obtained by the communication apparatus 1000, refer to the foregoing method embodiments. Details are not described herein again.

Based on the foregoing embodiments, an embodiment of this application further provides a communication system. The system includes at least one terminal device and at least one network device. For technical effects that can be obtained, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device in any one of the foregoing embodiments is implemented or the method performed by the network device in any one of the foregoing embodiments is implemented. The computer-readable storage medium may include any medium that can store program code, such as a USB flash drive, a removable hard disk, a read-only memory, a random access memory, a magnetic disk, or an optical disc.

To implement the functions of the communication apparatuses in FIG. 7 to FIG. 10, an embodiment of this application further provides a chip, including a processor, configured to support the communication apparatus in implementing the functions of a transmit end or a receive end in the foregoing method embodiments. In a possible design, the chip is connected to a memory or the chip includes a memory, and the memory is configured to store a computer program or instructions and data that are necessary for the communication apparatus.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the methods, the devices (system), and the computer program product according to embodiments of this application. It can be understood that the computer program or instructions may be used to implement each procedure and/or each block in the flowcharts and/or the block diagrams and a combination of procedures and/or blocks in the flowcharts and/or the block diagrams. These computer program or instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program or instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program or instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations of embodiments of this application provided that they fall within the scope of protection defined by the following claims and their equivalent technologies.

## Claims

1. A multimedia message transmission method, comprising:
obtaining, by a network device, at least two multimedia message bodies that are for same content, wherein sizes of the at least two multimedia message bodies are different;
determining, by the network device, hardware information of a terminal device, wherein the terminal device is a terminal device that needs to obtain the content; and
sending, by the network device, a multimedia message to the terminal device based on the hardware information, wherein the multimedia message is generated based on one multimedia message body in the at least two multimedia message bodies, and a size of the multimedia message body complies with a multimedia message capability corresponding to the hardware information; and the multimedia message capability indicates an upper limit that is of a size of a multimedia message and that is supported by the terminal device.

2. The method according to claim 1, wherein the hardware information comprises an operating system identifier of the terminal device; the at least two multimedia message bodies comprise a first multimedia message body and a second multimedia message body; a size of the first multimedia message body is less than a size of the second multimedia message body; and
the sending, by the network device, a multimedia message to the terminal device based on the hardware information comprises:
determining, by the network device based on the operating system identifier, a multimedia message capability that is supported by an operating system indicated by the operating system identifier; and
when an upper limit that is of a size of a multimedia message, that is supported by the terminal device, and that is indicated by the multimedia message capability supported by the operating system indicated by the operating system identifier is greater than a preset threshold, sending, by the network device, a multimedia message generated based on the second multimedia message body to the terminal device; or
when an upper limit of a size is less than or equal to a preset threshold, sending, by the network device, a multimedia message generated based on the first multimedia message body to the terminal device.

3. The method according to claim 1 or 2, wherein the determining, by the network device, hardware information of a terminal device comprises:
receiving, by the network device, a multimedia message request from the terminal device, wherein the multimedia message request comprises the hardware information.

4. The method according to any one of claims 1 to 3, wherein before the determining, by the network device, hardware information of a terminal device, the method further comprises:
determining, by the network device based on registration information of the terminal device, that the terminal device is a non-5G-capability online terminal device; and
sending, by the network device, a notification message to the terminal device, wherein the notification message is for notifying a case in which the network device has obtained the at least two multimedia message bodies that are for same content.

5. The method according to claim 4, further comprising:
storing, by the network device, the at least two multimedia message bodies, wherein
the notification message comprises a uniform resource locator URL, and the URL indicates storage addresses of the at least two multimedia message bodies; and
the sending, by the network device, a multimedia message to the terminal device comprises:
storing, by the network device, the multimedia message in the storage address indicated by the URL, and notifying the terminal device to download the multimedia message from the storage address indicated by the URL.

6. The method according to any one of claims 1 to 5, wherein the obtaining, by a network device, at least two multimedia message bodies that are for same content comprises:
receiving, by the network device, an application-to-point interaction message A2P from an application server, wherein the A2P comprises the content; and
generating, by the network device, the at least two multimedia message bodies based on the content.

7. A multimedia message transmission method, comprising:
sending, by a terminal device, hardware information to a network device; and
receiving, by the terminal device, a multimedia message from the network device, wherein the multimedia message is generated by the network device based on a multimedia message body; the multimedia message body is determined, based on the hardware information, by the network device in obtained at least two multimedia message bodies that are for same content, and a size of the multimedia message body complies with a multimedia message capability corresponding to the hardware information; and the multimedia message capability indicates an upper limit that is of a size of a multimedia message and that is supported by the terminal device, and the terminal device is a terminal device that needs to obtain the content.

8. The method according to claim 7, wherein the hardware information comprises an operating system identifier of the terminal device, and the at least two multimedia message bodies comprise a first multimedia message body and a second multimedia message body; a size of the first multimedia message body is less than a size of the second multimedia message body; and
the receiving, by the terminal device, a multimedia message from the network device comprises:
receiving, by the terminal device, a first multimedia message from the network device when an upper limit that is of a size of a multimedia message and that is supported by an operating system indicated by the operating system identifier is less than a preset threshold, wherein the first multimedia message is generated based on the first multimedia message body; or
receiving, by the terminal device, a second multimedia message from the network device when an upper limit that is of a size of a multimedia message and that is supported by an operating system indicated by the operating system identifier is greater than a preset threshold, wherein the second multimedia message is generated based on the second multimedia message body.

9. The method according to claim 7 or 8, wherein the sending, by a terminal device, hardware information to a network device comprises:
sending, by the terminal device, a multimedia message request to the network device, wherein the multimedia message request comprises the hardware information, and the multimedia message request requests the multimedia message.

10. The method according to any one of claims 7 to 9, wherein before the sending, by a terminal device, hardware information to a network device, the method further comprises:
receiving, by the terminal device, a notification message from the network device, wherein the notification message is for notifying a case in which the network device has obtained the at least two multimedia message bodies that are for same content; and the notification message comprises a uniform resource locator URL, and the URL indicates storage addresses of the at least two multimedia message bodies; and
the receiving, by the terminal device, a multimedia message from the network device comprises:
downloading, by the terminal device, the multimedia message from the storage address indicated by the URL, wherein the multimedia message is generated by the network device based on one multimedia message body and stored in the storage address.

11. A multimedia message transmission method, comprising:
obtaining, by a network device, at least two multimedia message bodies that are for same content, wherein sizes of the at least two multimedia message bodies are different;
sending, by a terminal device, hardware information to the network device, wherein the terminal device is a terminal device that needs to obtain the content;
determining, by the network device, the hardware information of the terminal device;
sending, by the network device, a multimedia message to the terminal device based on the hardware information, wherein the multimedia message is generated based on one multimedia message body in the at least two multimedia message bodies, and a size of the multimedia message body complies with a multimedia message capability corresponding to the hardware information; and the multimedia message capability indicates an upper limit that is of a size of a multimedia message and that is supported by the terminal device; and
receiving, by the terminal device, the multimedia message from the network device.

12. The method according to claim 11, wherein the hardware information comprises an operating system identifier of the terminal device; the at least two multimedia message bodies comprise a first multimedia message body and a second multimedia message body; a size of the first multimedia message body is less than a size of the second multimedia message body; and
the sending, by the network device, a multimedia message to the terminal device based on the hardware information comprises:
determining, by the network device based on the operating system identifier, a multimedia message capability that is supported by an operating system indicated by the operating system identifier; and
when an upper limit that is of a size of a multimedia message, that is supported by the terminal device, and that is indicated by the multimedia message capability supported by the operating system indicated by the operating system identifier is greater than a preset threshold, sending, by the network device, a multimedia message generated based on the second multimedia message body to the terminal device; or
when an upper limit of a size is less than or equal to a preset threshold, sending, by the network device, a multimedia message generated based on the first multimedia message body to the terminal device.

13. The method according to claim 11 or 12, wherein the sending, by a terminal device, hardware information to the network device comprises:
sending, by the terminal device, a multimedia message request to the network device, wherein the multimedia message request comprises the hardware information, and the multimedia message request requests the multimedia message.

14. The method according to any one of claims 11 to 13, wherein before the sending, by a terminal device, hardware information to the network device, the method further comprises:
receiving, by the terminal device, a notification message from the network device, wherein the notification message is for notifying a case in which the network device has obtained the at least two multimedia message bodies that are for same content; and the notification message comprises a uniform resource locator URL, and the URL indicates storage addresses of the at least two multimedia message bodies; and
the receiving, by the terminal device, the multimedia message from the network device comprises:
downloading, by the terminal device, the multimedia message from the storage address indicated by the URL, wherein the multimedia message is generated by the network device based on one multimedia message body and stored in the storage address.

15. A communication apparatus, comprising a transceiver unit and a processing unit, wherein
the transceiver unit is configured to obtain at least two multimedia message bodies that are for same content, wherein sizes of the at least two multimedia message bodies are different;
the processing unit is configured to: determine hardware information of a terminal device, wherein the terminal device is a terminal device that needs to obtain the content; and generate a multimedia message based on the hardware information, wherein the multimedia message is generated based on one multimedia message body in the at least two multimedia message bodies, and a size of the multimedia message body complies with a multimedia message capability corresponding to the hardware information; and the multimedia message capability indicates an upper limit that is of a size of a multimedia message and that is supported by the terminal device; and
the transceiver unit is further configured to send the multimedia message to the terminal device.

16. The apparatus according to claim 15, wherein the hardware information comprises an operating system identifier of the terminal device; the at least two multimedia message bodies comprise a first multimedia message body and a second multimedia message body; a size of the first multimedia message body is less than a size of the second multimedia message body; and
the processing unit is specifically configured to:
determine, based on the operating system identifier, a multimedia message capability that is supported by an operating system indicated by the operating system identifier;
generate a multimedia message based on the second multimedia message body when an upper limit that is of a size of a multimedia message, that is supported by the terminal device, and that is indicated by the multimedia message capability supported by the operating system indicated by the operating system identifier is greater than a preset threshold; and
generate a multimedia message based on the first multimedia message body when an upper limit of a size is less than or equal to a preset threshold.

17. The apparatus according to claim 15 or 16, wherein the transceiver unit is further configured to receive a multimedia message request from the terminal device, wherein the multimedia message request comprises the hardware information; and
when determining the hardware information of the terminal device, the processing unit is specifically configured to determine the hardware information of the terminal device based on the multimedia message request received by the transceiver unit.

18. The apparatus according to any one of claims 15 to 17, wherein the processing unit is further configured to:
when determining, based on registration information of the terminal device, that the terminal device is a non-5G-capability online terminal device, send a notification message to the terminal device through the transceiver unit, wherein the notification message is for notifying a case in which the network device has obtained the at least two multimedia message bodies that are for same content.

19. The apparatus according to claim 18, wherein the processing unit is further configured to store the at least two multimedia message bodies, and the notification message comprises a uniform resource locator URL, wherein the URL indicates storage addresses of the at least two multimedia message bodies;
the processing unit is further configured to store a generated multimedia message in the storage address indicated by the URL; and
the transceiver unit is further configured to notify the terminal device to download the multimedia message from the storage address indicated by the URL.

20. The apparatus according to any one of claims 15 to 19, wherein when obtaining the at least two multimedia message bodies that are for same content, the transceiver unit is specifically configured to receive an application-to-point interaction message A2P from an application server, wherein the A2P comprises the content; and
the processing unit is further configured to generate the at least two multimedia message bodies based on the content.

21. A communication apparatus, comprising a processing unit and a transceiver unit, wherein
the processing unit is configured to generate hardware information; and
the transceiver unit is configured to: send the hardware information to a network device, and receive a multimedia message from the network device, wherein the multimedia message is generated by the network device based on a multimedia message body, the multimedia message body is determined, based on the hardware information, by the network device in obtained at least two multimedia message bodies that are for same content, and a size of the multimedia message body complies with a multimedia message capability corresponding to the hardware information; and the multimedia message capability indicates an upper limit that is of a size of a multimedia message and that is supported by the terminal device, and the terminal device is a terminal device that needs to obtain the content.

22. The apparatus according to claim 21, wherein the hardware information comprises an operating system identifier of the terminal device, the at least two multimedia message bodies comprise a first multimedia message body and a second multimedia message body, and a size of the first multimedia message body is less than a size of the second multimedia message body; and
the transceiver unit is specifically configured to:
receive a first multimedia message from the network device when an upper limit that is of a size of a multimedia message and that is supported by an operating system indicated by the operating system identifier is less than a preset threshold, wherein the first multimedia message is generated based on the first multimedia message body; or
receive a second multimedia message from the network device when an upper limit that is of a size of a multimedia message and that is supported by an operating system indicated by the operating system identifier is greater than a preset threshold, wherein the second multimedia message is generated based on the second multimedia message body.

23. The apparatus according to claim 21 or 22, wherein the transceiver unit is specifically configured to:
send a multimedia message request to the network device, wherein the multimedia message request comprises the hardware information, and the multimedia message request requests the multimedia message.

24. The apparatus according to any one of claims 21 to 23, wherein the transceiver unit is further configured to:
receive a notification message from the network device, wherein the notification message is for notifying a case in which the network device has obtained the at least two multimedia message bodies that are for same content, and the notification message comprises a uniform resource locator URL, and the URL indicates storage addresses of the at least two multimedia message bodies; and
the transceiver unit is specifically configured to download the multimedia message from the storage address indicated by the URL, wherein the multimedia message is generated by the network device based on one multimedia message body and stored in the storage address.

25. A communication apparatus, comprising at least one processor, wherein the processor is coupled to a memory;
the memory is configured to store a computer program or instructions; and
the processor is configured to execute the computer program or the instructions, to implement the method according to any one of claims 1 to 6 or implement the method according to any one of claims 7 to 10.

26. A communication apparatus, comprising a logic circuit and an input/output interface, wherein
the logic circuit is configured to: obtain at least two multimedia message bodies that are for same content, wherein sizes of the at least two multimedia message bodies are different; determine hardware information of a terminal device, and generate a multimedia message based on the hardware information, wherein the multimedia message is generated based on one multimedia message body in the at least two multimedia message bodies, and a size of the multimedia message body complies with a multimedia message capability corresponding to the hardware information; the multimedia message capability indicates an upper limit that is of a size of a multimedia message and that is supported by the terminal device; and the terminal device is a terminal device that needs to obtain the content; and
the input/output interface is configured to output the multimedia message to the terminal device.

27. A communication apparatus, comprising a logic circuit and an input/output interface, wherein
the logic circuit is configured to generate hardware information; and
the input/output interface is configured to: output the hardware information to a network device, and input a multimedia message from the network device, wherein the multimedia message is generated by the network device based on a multimedia message body, the multimedia message body is determined, based on the hardware information, by the network device in obtained at least two multimedia message bodies that are for same content, and a size of the multimedia message body complies with a multimedia message capability corresponding to the hardware information; and the multimedia message capability indicates an upper limit that is of a size of a multimedia message and that is supported by the terminal device, and the terminal device is a terminal device that needs to obtain the content.

28. A computer-readable storage medium, wherein the computer-readable storage medium stores a computer program or instructions; and when the computer program or the instructions are run on a computer, the method according to any one of claims 1 to 6 is implemented, or the method according to any one of claims 7 to 10 is implemented.

29. A computer program product, comprising computer-executable instructions, wherein when the computer-executable instructions are run on a computer, the computer is enabled to perform the method according to any one of claims 1 to 6 or the method according to any one of claims 7 to 10.
